Europäisches Patentamt

European Patent Office

Office européen des brevets

(19)

(11) Numéro de publication: **0 129 482**

**B1**

(12) **FASCICULE DE BREVET EUROPEEN**

(45) Date de publication du fascicule du brevet: **09.05.90**

(21) Numéro de dépôt: **84401240.1**

(22) Date de dépôt: **15.06.84**

(51) Int. Cl.⁵: **G 05 B 19/417,** B 23 Q 41/02

(54) **Installation modulaire pour l'assemblage et/ou l'usinage de pièces, avec dispositifs claviers-afficheurs à chaque poste.**

(30) Priorité: **17.06.83 FR 8310059**

(43) Date de publication de la demande:
**27.12.84 Bulletin 84/52**

(45) Mention de la délivrance du brevet:
**09.05.90 Bulletin 90/19**

(84) Etats contractants désignés:
**AT BE CH DE FR GB IT LI LU NL SE**

(56) Documents cités:
**EP-A-0 003 024**
**EP-A-0 050 080**
**DE-A-1 809 745**
**DE-A-2 065 774**

(73) Titulaire: **Prodel, Jacques**
**120 rue de Cuts Carlepont**
**F-60170 Ribecourt (FR)**

(72) Inventeur: **Prodel, Maurice**
**Route de Vic sur Aisne Carlepont**
**F-60170 Ribecourt (FR)**
Inventeur: **Prodel, Jacques**
**120, rue de Cuts Carlepont**
**F-60170 Ribecourt (FR)**

(74) Mandataire: **Plaçais, Jean-Yves et al**
**Cabinet Netter, 40, rue Vignon**
**F-75009 Paris (FR)**

EP 0 129 482 B1

Courier Press, Leamington Spa, England.

**Description**

L'invention concerne les installations pour l'assemblage et/ou l'usinage de pièces, manuellement et/ou automatiquement, à structure modulaire.

Les Demandeurs ont déjà proposé des installations à plusieurs postes, de structure modulaire, pour l'assemblage et/ou l'usinage de pièces, dans le document EP—A—0 050 080 (voir aussi EP—A—0 115 357).

Ces installations d'assemblage et/ou d'usinage flexibles modulaires apportent de grands avantages, notamment pour les fabrications en petite série. L'utilisateur peut en particulier, à tout moment ajuster la structure de son istallation, et en optimizer les performances, en fonction des besoins et de leurs évolution.

Les installations modulaires décrites dans les demandes de Brevets et d'additions précitées comportent un circuit de convoyage sur lequel se déplacent des palettes porte-pièces. Ce circuit dessert une succession de postes d'assemblage et/ou d'usinage manuel et/ou automatique, qui lui sont associés en série et/ou en parallèle, et que l'on appelera ci-après postes de travail. Les Demandeurs ont déjà proposé que chaque palette porte des informations codées modifiables.

Chaque poste de travail comporte alors en amont de son emplacement de travail un organe de lecture et à l'emplacement de travail ou en aval de celui-ci, un organe d'écriture, on peut ainsi donner un nouveau code de destination à une palette dont la pièce a subi une opération déterminée par le code précédemment lu.

Un tel codage permet d'envisager la gestion de la circulation des palettes à l'aide de moyens de traitement de l'ensemble des informations relatives au fonctionnement de l'installation. On rencontre alors de sérieux problèmes pratiques. En effet, la masse d'informations à traiter est tout d'abord considérable. Ensuite, il est nécessaire que ces moyens de traitement soient rendus compatibles avec le caractère évolutif et modulaire de l'installation. Il est enfin souhaitable que leur adaptation à chaque cas particulier d'application soit aussi aisée et rapide que celle des différents modules constituant l'installation.

La présente invention vient fournir des moyens particulièrement intéressants pour résoudre ce problème.

D'une manière générale, la présente invention concerne une installation pour effectuer des opérations définies telles qu'assemblage et/ou usinage, du type comportant une pluralité de postes de travail manuels et/ou automatiques, agencés chacun pour la réalisation de l'une au moins desdites opérations, ces postes de travail étant desservis par un circuit fermé principal du convoyage auquel ils sont associés chacun en série ou en dérivation, ce circuit de convoyage véhiculant des palettes porte-pièces munies de support d'informations codées modifiables et chaque poste de travail comportant, en amont de son emplacement de travail, un organe de lecture et, à l'emplacement de travail ou en aval de celui-ci, un organe d'écriture apte à donner un nouveau code à une palette.

Selon un aspect de l'invention, chaque poste comporte une unité locale de gestion de données avec des mémoires et un interface d'entrée/sortie propre à être relié à des capteurs et/ou actionneurs servant pour l'exécution d'une ou plusieurs opérations successives en un emplacement de travail dudit poste de travail, ladite mémoire contenant à chaque poste au moins une table de correspondance constituée de couples de codes de palettes, le premier code de chaque couple étant un code avec lequel une palette est autorisée à entrer dans le poste pour y subir une opération correspondant à ce code, tandis que le second code de chaque couple est normalement donné à la même palette après l'exécution de ladite opération; et les mémoires des différents postes sont agencées avec des tables de correspondances respectives propres à faire subir aux produits portés par les palettes au moins une séquence d'opérations prédéterminées, jusqu'a un poste de sortie.

Selon un autre aspect de l'invention, des postes répétés propres à effectuer les mêmes tâches, en particulier des postes à deux circuits parallèles, sont associés à des mémoires dont les tables de correspondance n'ont aucun couple de codes en commun, pour l'une au moins desdites séquences d'opérations prédéterminées, l'enchaînement de ces couples de codes non communs avec des couples de codes affectés à d'autres postes permettant d'associer un lot respectif de palettes identifiables à chaque des postes répétés précités, ce que permet un travail en répétition de tâches qui soit néanmoins responsabilisé.

Dans un mode de réalisation préférentiel, il est associé à chaque unité locale de traitement un dispositif clavier-afficheur, relié à cette unité, et possédant au moins un état d'écriture où il permet l'introduction en mémoire de ladite table de correspondance, tandis que l'état normal du dispositif clavier-afficheur consiste à afficher le couple de codes concernant la palette présente à l'emplacement de travail du poste.

Selon une ature caractéristique de l'invention qui intéresse au moins les postes de travail travaillant en dérivation du circuit principal de convoyage, le dispositif clavier-afficheur possède un second état d'écriture dans lequel il permet la mémorisation du nombre maximal de palettes po-pièces admissibles en même temps sur le trajet de dérivation du poste de travail concerné. De préférence, le dispositif clavier-afficheur possède au moins un troisième état d'écriture dans lequel il permet la mémorisation du côté du circuit principal de convoyage sur lequel est situé le poste, pour permettre la transposition du code de lecture et d'écriture du support d'informations codées des palettes lorsque celui-ci conserve une même direction dans l'espace et est donc reconnu dans des sens différents de défilement.

En ce qui concerne à nouveau les postes manuels (au moins), le clavier-afficheur possède avantageusement au moins un quatrième état d'écriture dans lequel il permet la mémorisation de la référence du produit traité ou la référence de l'opération à réaliser lorsque celle-ci est directement liée au code d'admission de palette, cette mémorisation définissant une autre table de correspondance, tandis que le clavier-afficheur permet au choix l'affichage du couple de codes d'admission et de destination ou de ladite référence.

Selon une autre caractéristique de l'invention, au moins une unité locale de traitement à clavier-afficheur possède un connecteur permettant le raccordement optionnel d'un deuxième clavier-afficheur à la disposition d'un opérateur, ce clavier auxiliaire permettant de modifier à distance le code de destination des palettes, ou la référence produit de manière ponctuelle sans changement du code automatique résident.

Selon un autre aspect encore de l'invention, l'unité de traitement est apte à conserver en mémoire le nombre et la nature des opérations effectuées au poste de travail où elle est implantée et il est prévu un état spécifique d'affichage du dispositif clavier-afficheur auxiliaire concerné pour indiquer le travail accompli et/ou restant à faire à partir des informations mémorisées.

Enfin, l'invention prévoit aussi que les différents dispositifs clavier-afficheur avec leur unité de traitement associée décentralisée soient aptes au raccordement à un bus de liaison optionnel susceptible de permettre l'interconnexion de tous les postes à un dispositif conversationnel de traitement centralisé servant pour la surveillance des flux de circulation de l'ensemble des palettes et la télé-programmation manuelle et/ou automatique des modifications d'utilisation série ou parallèle des postes et/ou de leur numéro de code et/ou du nombre maximal de palettes porte-pièces admissibles en même temps sur leur circuit dérivé.

D'autres caractéristiques et avantages de l'invention apparaîtront à l'examen de la description détaillée qui va suivre, et des dessins annexés, sur lesquels:

la figure 1 est le schéma de principe d'un exemple particulier d'installation selon la présente invention;

la figure 2 est un schéma semblable à celui de la figure 1, pour faire apparaître plus clairement les moyens utilisés selon la présente invention;

les figures 3 à 8 illustrent le clavier-afficheur utilisé selon la présente invention dans six situations particulières différentes d'affichage;

la figure 9 est un schéma fonctionnel illustrant le travail des postes manuels PM1 à PM3;

la figure 10 est le schéma de principe électrique des éléments incorporés de l'unité de traitement avec son clavier-afficheur, tandis que les figures 11A à 11C en sont des schémas d'implantation; et

les figures 12 et 13 sont deux organigrammes de principe servant à illustrer le fonctionnement du klavier-afficheur et de son unité de traitement.

Les modalités particulières, essentiellement mécaniques, de réalisation d'une installation d'assemblage et/ou d'usinage de pièces à structure modulaire sont décrites dans les documents EP—A—0 050 080 et EP—A—0 115 357 déjà cités, auxquelles on pourra se reporter pour une meilleure compréhension de la présente invention, ainsi que pour sa mise en pratique par l'homme de l'art.

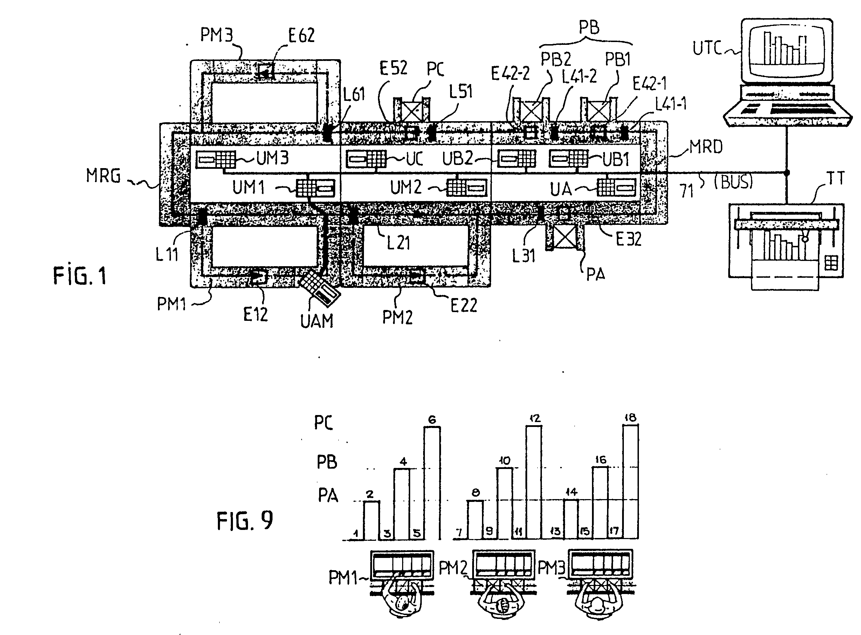

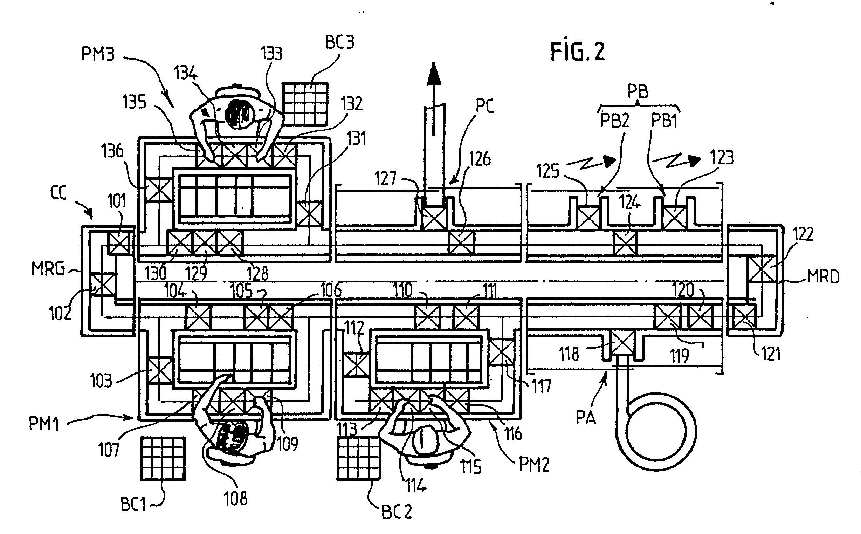

On fera maintenant référence aux figures 1 et 2. L'installation représentée comporte un circuit fermé principal de convoyage, noté dans son emsemble CC. Ce circuit est défini par une série de modules placés sur deux lignes, réunies par des modules de retour notés MRG et MRD. En partie basse, le module de retour MRG est suivi de deux modules manuels à trajet de dérivation, notés successivement PM1 et PM2. Ensuite, vient le module PA qui est un module de travail automatique où l'opération est effectuée en série dans un guichet adjacent au circuit principal. Après cela, le second module de retour MRD remonte vers la ligne haute du circuit principal CC. Vient alors un module PB à deux guichets PB1 et PB2, qui permet, comme on le verra ci-après, la réalisation de deux opérations automatiques semblables. Le module PB est suivi d'un module automatique PC à guichet. Enfin, le circuit est fermé par un module manual PM3, à trajet de dérivation, et dont la sortie communique avec la partie haute du module de retour MRG déjà mentionné. Sur les différents modules de l'installation sont représentées des palettes porte-pièces, désignées par les références 101 à 136. Bien qu'un poste spécial puisse être prévu à cet effet, les pièces sont supposées être introduires sur les palettes au niveau de l'un des modules manuels, par exemple le module PM1.

Pour fixer les idées, on admettra que l'installation représentée est utilisée pour une phase de l'assemblage d'un interrupteur électrique. Les modules PM1, PM2 et PM3 définissent des postes manuels en chacun desquels une opératrice positionne dans l'interrupteur un composant, qu'elle prélève dans un bac à casiers BC1 à BC3, placé à sont côté. Ensuite, le poste automatique PA à guichet réalise la fixation dudit composant, par exemple par sertissage. Fonctionnant à cadence rapide, une seule machine suffit pour plusieurs postes manuels. Les deux guichets PB1 et PB2 du poste PB sont prévus ici pour effectuer, l'une comme l'autre, une opération de test électrique plus longue.

Enfin, le poste PC, également du type module à guichet, joue le rôle de poste de sortie.

Les palettes porte-pièces 101 à 136 sont chacune munies d'un support d'informations codées modifiables. Ces informations codées peuvent être définies par exemple par six touches, qui sont chacune susceptibles de prendre deux positions. Cela correspond à un code à six bits, auquel on peut associer les valeurs binaires 0 à 64. Chaque poste de travail, par exemple PM1, comporte en amont un organe L11 apte à lire la position des touches d'une palette entrant dans le module PM1. En aval de l'emplacement de travail du poste (ici en aval de la position de l'opératrice) est placé un organe d'écriture E12 apte à donner un nouveau code de destination à une palette, ici la palette 108, dont la pièce a subi l'opération déterminée par le code précédemment lu en L11 (voir figures 1 et 2). De même, le poste PM2 est associé à un organe de lecture L21 et à un organe d'écriture E22; le poste P1 à un organe de lecture L31 et à un organe d'écritue E32, le poste PB1 à un organe de lecture L41-1 et à un organe d'écriture E42-1, le poste PB2 à un organe de lecture L41-2 et à un organe d'écriture E42-2, le poste PC à un organe de lecture L51 et à un organe d'écritue L52, et enfin le poste PM3 à un organe de lecture L61 et à un organe d'écriture E62. Un tel équipement est systèmatiquement installé sur tous les emplacements de travail possibles des différents modules. Il est clair que certains des organes d'écriture et/ou de lecture pourront rester inutilisés dans certaines configurations de l'installation.

A chaque poste de travail est associé un dispositif clavier-afficheur, noté UM1, UM2, UA, UB1, UB2, UC, UM3 respectivement pour les postes PM1, PM2, PA, PB1, PB2, PC, PM3.

Chaque dispositif clavier-afficheur est interconnecté à une unité locale de traitement de données, munie de mémoires et d'un interface d'entrée/sortie, ces moyens étant, de préférence, physiquement incorporés au boîtier du dispositif clavier-afficheur. Sur la figure 1, les différents dispositifs claviers-afficheurs sont représentés dans la partie centrale du circuit principal CC; d'une manière générale, leur implantation est telle qu'au moins leur partie clavier n'est pas accessible en service normal, tandis que leur partie affichage est visible en toute circonstance. On note également un clavier-afficheur auxiliaire UAM, branché sur l'unité UM1 du poste PM1.

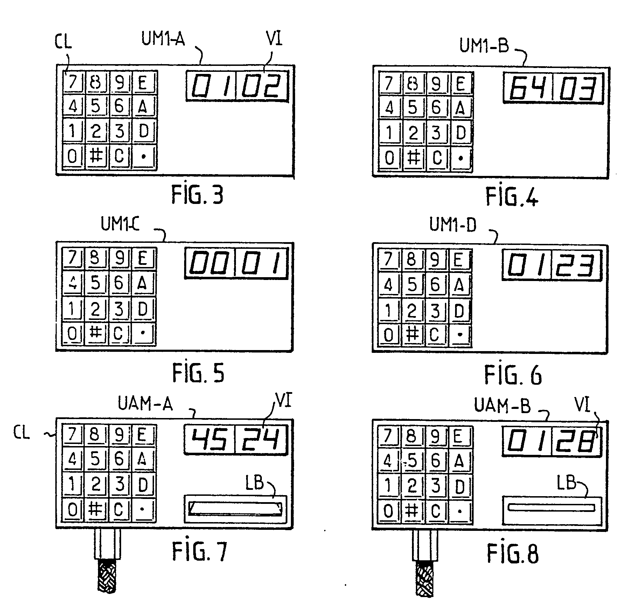

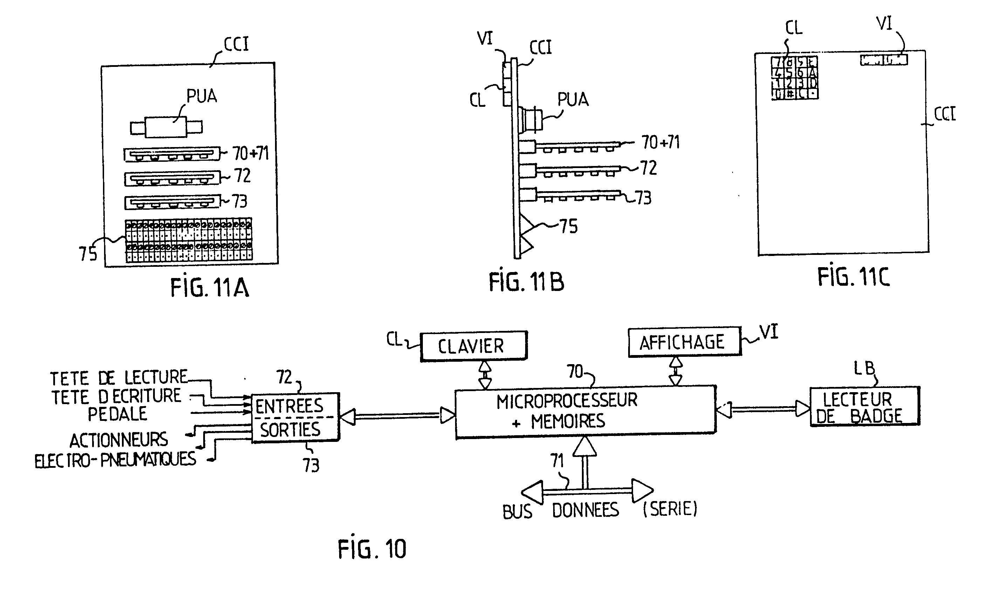

Sur les figures 3 à 8, la référence CL désigne la partie clavier du dispositif, et la référence VI désigne la partie affichage. Les figures 3 à 6 montrent à titre d'exemple le dispositif clavier-afficheur du poste manuel PM1 dans quatre états différents, identifiés par les suffixes A à D. Les figures 7 et 8 montrent le dispositif clavier-afficheur auxiliaire UAM associé au poste automatique PM1, et muni d'un lecteur de badge LB. On pourrait également prévoir que tous les dispositifs claviers-afficheurs possèdent un lecteur de badge.

La figure 10 illustre le schema de principe d'un dispositif clavier-afficheur. Une unité de traitement 70 est réalisée par un microprocesseur accompagné de ses mémoires, qui sont soit incorporées au circuit intégré du microprocesseur, soit réalisées par des circuits intégrés de mémoire disposés sur la même carte imprimée.

Le microprocesseur est également relié à un interface d'entrée 72 et de sortie 73, qui permet la prise en compte de l'ensemble des informations nécessaires au bon fonctionnement du module concerné, ainsi que la définition des commandes correspondantes. S'agissant du dispositif clavier-afficheur UM1 du poste PM1, l'interface 72 est relié à la tête de lecture L11, à la tête d'écriture E12, et à une pédale (non représentée) susceptible d'être actionnée par l'opératrice pour indiquer qu'elle a fini une opération sur la palette porte-pièce 108 se trouvant devant elle, ainsi qu'à différents autres organes de contrôle et/ou de commande associées au module PM1, dont les actionneurs électro-pneumatiques qui assurent l'aiguillage des palettes entrant dans le module PM1 soit sur le trajet principal en 104, soit sur le trajet de dérivation en 103. Il en est de même pour le retour des palettes sur le circuit principal, en sortie du module PM1, notamment.

De préférence, le microprocesseur 70 de chacun des dispositifs claviers-afficheurs est encore relié à un bus de transmission de données en série, noté 71. Celui-ci permet d'interconnecter tous les dispositifs claviers-afficheurs, entre eux, et avec un micro-ordinateur noté UTC sur la figure 1, qui réalise la centralisation de l'ensemble des informations essentielles relatives au fonctionnement de l'installation.

Les figures 11A, 11B et 11C donnent un exemple d'implantation très compacte des claviers-afficheurs avec leurs moyens de traitement. Un substrat de circuit imprimé CCI porte côté intérieur une prise PUA pour le clavier-afficheur auxiliaire tel UAM, le cas échéant; il s'y ajoute trois cartes à circuit imprimé enfichées sur connecteur:

—la carte du haut, 70 et 71, pour le microprocesseur et ses mémoires, ainsi que la liaison au bus;

—la carte médiane 72 pour l'interface d'entrée; et

—la carte basse 73 pour l'interface de sortie.

Un bornier 75 permet l'ensemble des liaisons électriques.

Côté extérieur, le haut du substrat CCI, bien visible, mais inaccessible en service normal, supporte le clavier CL, et l'affichage VI.

Dans le cas d'un clavier-afficheur auxiliaire, ou en variante des claviers-afficheurs principaux, on y ajoute le lecteur de badge LB (non représenté ici).

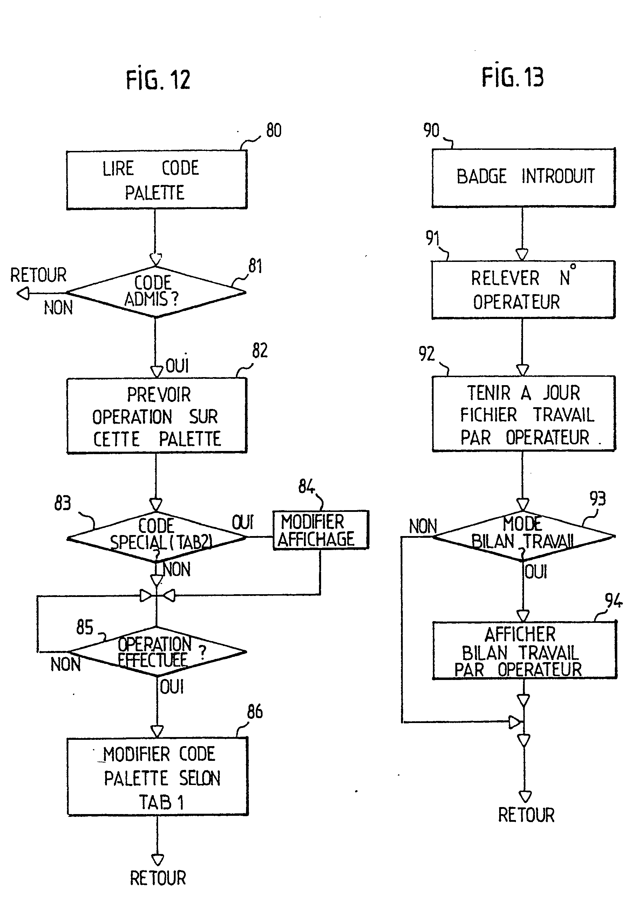

Au niveau de chacun des postes de travail, le microprosseur associé 70 comporte en mémoire au moins deux emplacements de tables de correspondance, que l'on notera ci-après TAB 1 et TAB 2. Il comporte également, mais en mémoire de programme, les informations nécessaires pour établir un organigramme du type illustré sur la figure 12 et, dans le cas où un lecteur de badge est incorporé, un organigramme selon la figure 13.

On s'intéressera maintenant aux opérations à effectuer lors de la mise en service d'une installation nouvellement réalisée à partir de modules, ou de la remise à jour d'une telle installation. Après l'implantation physique convenable des différents modules, un personnel spécialisé, ou régleur, va utiliser les différents dispositifs claviers-afficheurs pour définir des caractéristiques opérationnelles et cinématiques à chaque poste.

Sur les figures 3 à 6, le clavier CL comporte classiquement des touches numériques de 0 à 9, avec point décimal, une touche d'effacement notée C, une touche de confirmation notée #. De plus, le clavier comporte une touche E qui permet l'écriture dans la mémoire du microprocesseur, comme on le verra ci-après, une touche A qui permet le retour au mode normal, notamment à partir de ce mode d'écriture, et enfin une touche D qui permet l'exploration pas à pas du contenu des mémoires associées au microprocesseur.

A propos du poste de travail PM1, le régleur de l'installation va donc tout d'abord actionner la touche d'écriture, puis frapper 01 suivi de 02, et actionner la touche de confirmation (figure 3). Le couple de codes 01, 02 est introduit par le microprocesseur 70 dans la table TAB 1, et détermine le fait que les palettes dont le code est 01 à l'entrée ont la possibilité de s'acheminer sur le trajet de dérivation du poste PM1, d'y subir l'opération correspondante, et de voir ensuite au niveau de l'organe d'écriture E12 leur code modifié en 02, ce qui les prépare à subir l'opération d'un autre poste.

L'entrée de la palette au poste P1 peut être soumise à d'autres conditions. Dans le cas d'un poste en dérivation, le régleur va à nouveau actionner la touche E, suivie du code 64, et de l'indication 03, puis d'une confirmaiton (figure 4). Le code 64 (situé en dehors des codes de palette 0—63) est choisi arbitrairement comme identifiant le nombre de palettes (ici trois), admises simultanément dans le trajet de dérivation du poste PM1. On a ainsi défini d'une part une opération qui peut être effectuée au poste PM1 d'autre part un aspect essentiel de la cinématique associée au poste PM1 à savoir le nombre de palettes qu'il peut admettre sur son trajet de dérivation.

Il suffit d'un seul couple de codes pour que l'installation devienne opérationnelle, mais l'invention en permet beaucoup plus, comme décrit ci-après.

Au préalable, on notera que les palettes conservent en principe la même orientation dans l'espace. L'invention prévoit avantageusement que le régleur introduise, après un code spécial 100, une valeur binaire 00 ou 01 indiquant si le poste est sur la ligne haute ou basse du circuit fermé CC (figure 5). Cela simplifie considérablement l'interprétation des codes lus, par l'unité de traitement concernée.

Dans la pratique, l'opératrice d'un poste manuel comme PM1 va effectuer d'autres opérations sur le même produit, après que celui-ci ait effectué une ou plusieurs révolutions sur le circuit principal CC. Elle pourra aussi effectuer des opérations légèrement différentes sur un produit spécial comme on le verra plus loin.

Dans le premier cas (opérations successives concernant le même produit), le régleur affectera au poste PM1, entre le couple 01/02, les couples de codes 03/04 et 05/06, par exemple.

Au poste manuel PM2, il affecte les couples de codes 07/08, 09/10 et 11/12. Au poste PA, les codes 02/03, 08/09 et 14/15. Aux postes automatiques PB1 et PB2, les mêmes couples de codes sont attibués, à savoir 04/05, 10/11 et 16/17. Le poste automatique PC, qui joue ici le rôle de poste de sortie, reçoit les couples de codes 06/01, 12/07 et 18/13. Enfin, le poste manuel PM3 reçoit les couples de codes 13/14, 15/16 et 17/18.

Après avoir effectué ces opérations de préparation, le régleur actionne les touches A des différents claviers-afficheurs, ce qui les ramène au mode normal.

La figure 9 donne le trajet des palettes entre chacun des poste manuels PM1 à PM3 et les postes automatiques PA, PB et PC, dans l'exemple ci-dessus.

On note, selon un aspect important de la présente invention, qu'une palette donnée ira, touours au même poste manuel, et que l'opérateur ou l'opératrice de ce poste va donc assumer l'ensemble des opérations manuelles relatives au produit porté par la palette en question.

Bein entendu, les mémoires peuvent enregistrer, pour chaque poste, plusieurs séquences d'opérations correspondant à des produits voisins, voire différentes, qui peuvent être produits en même temps, ou successivement dans le temps.

On aura remarqué que les deux postes automatiques équivalents PB1 et PB2 ont tous leurs couples de codes identiques (du moins pour une séquence d'opérations données). Inversement, les trois poste manuels équivalents n'ont aucun couple de codes en commun (pour la séquence d'operation donnée—figure 9). On peut dire que les postes manuels travaillent "en boucle fermée" pour des lots de palettes respectivement associées, comme le manifestent les couples de codes consécutirs qui leur sont associés (voir 01/02, 03/04 et 05/06 pour PM1). Par contre, les postes automatiques travaillent en boucle ouverte, et peuvent admettre toutes les palettes.

C'est ici, le poste de sortie PC qui assure la "fermeture" des boucles précitées, par ses couples 06/01, 12/07 et 18/13.

Au niveau de chaque poste, le mode normal d'affichage consiste à visualiser dans l'affichage correspondant VI d'un côté le code d'entrée, par exemple 01, de la palette qui se trouve à l'emplacement de travail du poste (par exemple la palette 108 au poste PM1) et de l'autre côté, la code de sortie 02 après que l'opération aura été effectuée. Toujours pour le poste PM1, la palette 109 vient d'être traitée par l'opératrice qui a appuyé sur se pédale, auquel cas l'organe d'écriture E12 a changé en 02 le code de cette palette 019. On dispose ainsi en permanence, au niveau de chaque poste de travail, d'un affichage de grandes dimensions indiquant en temps réel les opérations en cours d'exécution.

La description ci-dessus associe plusieurs codes opérations à chaque poste. Dans le cas notamment des postes manuels, cela peut demander un effort d'attention excessif à l'opérateur ou l'opératrice, surtout dans le cas où certaines pièces—certains interrupteurs spéciaux nécessitent des interventions particulières.

En ce cas, pour certains au moins des dispositifs claviers-afficheurs, et certains au moins des codes d'admission affectés à ceux-ci, il est prévu l'enregistrement d'une autre correspondance entre chacun de ces codes d'admission, et une information codée spéciale, constituant la référence du produit véhiculé par la palette admise, ou l'indication d'une opération spécifique à réaliser au poste de travail associé au dispositif clavier-afficheur.

Pour décrire cela, on reviendra au stade de préparation de l'installation. Lorsqu'il a introduit les codes d'admission dans la table TAB 1, le régleur actionne à nouveau ensuite la touche E, suivie d'un code spécial, par exemple 99, qui incite le microprocesseur 70 à accéder à une autre table TAB 2. En correspondance avec le code d'opération naturel par exemple 01, on introduit alors dans la table TAB 2 un code spécifique, numérique, par exemple 23, ou encore alpha-numérique, qui permettra à l'opératrice une meilleure compréhension des opérations qu'elle doit effectuer sur la palette (lecture 01/23 sur la figure 6).

On se référera maintenant à la figure 12, qui résume l'ensemble des opérations effectuées par le microprocesseur 70 associé par exemple au poste PM1 lorsqu'un code vient d'être lu au niveau de l'organe de lecture L11 (étape 80 de la figure 8). Le test 81 détermine si ce code est admis pour entrer dans la trajet de dérivation et si celui-ci n'est pas déjà occupé par trois palettes. Si oui, l'étape 82 va "suivre la palette", c'est-à-dire enregistrer sont passage dans le trajet de dérivation, et activer le poste PM1 pour l'opération à effectuer sur cette palette. Le test 83 détermine si l'opération concernée à fait l'objet d'un code spécial dans la table TAB 2, auquel cas l'étape 84 modifie éventuellement seulement sur demande de l'opérateur le mode de fonctionnement du dispositif d'affichage VI pour afficher non pas le code naturel des opérations (du type 01/02), mais le code spécial affecté à cette opération et enregistré dans la table TAB 2. Qu'il y ait ou non code spécial, on passe ensuite à l'étape 85, qui est un test examinant si le travail a été effectué, la chose étant ici matérialisée par l'actionnement d'une pédale par l'opératrice. Si oui, l'etape 86 va actionner l'organe d'écriture E12 pour modifier le code de la palette selon le contenu de la table TAB 1. En sortie NON du test 81, ou à la fin de l'étape 86, on retourne au fonctionnement courant du microprocesseur 70, qui est relatif à la surveillance d'ensemble du poste PM1, en son trajet principal et en son trajet de dérivation.

Le dispositif de traitement des informations conserve en mémoire le nombre et la nature des opérations effectuées à chaque poste de travail. De préférence, cette tâche est confiée à l'unité de traitement locale 70, qui va donc conserver en mémoire le nombre et la nature des opérations effectuées au poste de travail où elle est implantée. Il est prévu un étant spécifique d'affichage du dispositif clavier-afficheur concerné, (c'est-à-dire celui associé au poste de travail en question) et, dans cet état spécifique, le clavier-afficheur indique le travail accompli et/ou restant à faire à partir des informations mémorisées.

Cela peut se faire sur interrogation au clavier à l'aide d'un code spécial, qui changerait alors le mode normal d'affichage (code d'admission de palettes; code de sortie de palettes) pour lui substituer une indication numérique du nombre de pièces traitées, ou du nombre de pièces encore à traiter sur une période de temps déterminée.

De préférence, on réalise cette fonction à l'aide du lecteur de badge d'un clavier-afficheur auxiliaire tel UAM au moins pour les postes manuels. Les informations mémorisées sur le travail effectué et/ou à faire sont alors classées suivant une identification de l'opérateur (ou une simple identification de phase de travail dans le cas d'un poste automatique).

L'opérateur peut simplement engager son badge lorsqu'il prend son service, et le retirer à la fin du service, cette opération étant accompagnée de l'affichage temporaire du nombre de pièces traitées et de celui restant à traiter, ensemble ou en succession.

Une variante préférentielle consiste à laisser le badge en place sur le lecteur de badge tant que l'opérateur est à son poste, celui-ci pouvant de temps à autre exercer une poussée sur le badge, ce qui modifie alors le mode d'affichage, passant de l'indication des codes d'entrée et de sortie ou autres à l'indication des quantités de travail fait et/ou à faire.

En même temps, l'unité de traitement associée au dispositif clavier-afficheur utilise son horloge interne pour mesurer le temps pendant lequel un opérateur est en service, et associer ce temps au nombre de pièces faites.

L'ensemble de ces informations est transmis au micro-ordinateur UTC chargé de la gestion générale, par le bus 50. A partir de ces informations, le micro-ordinateur UTC peut élaborer par exemple des histogrammes de cadence, comme le montre l'affichage de la figure 1. Il assure de la sorte le gestion de l'ensemble de l'installation. De plus, l'observation du déroulement des différentes opérations à faire peut s'accompagner d'une optimisation des flux de circulation des palettes, les informations statistiques disponibles au niveau du micro-ordinateur UTC permettant au régleur de modifier à volonté et d'une manière très simple, à l'aide des différents claviers-afficheurs, les principaux paramètres de fonctionnement de l'installation.

On se référera maintenant à la figure 13 qui décrit à titre d'exemple un organigramme permettant la réalisation des fonctions qui viennent d'être décrites.

L'étape 90 introduit cet organigramme à partir de l'information comme quoi un badge est introduit dans le lecteur de bade (voir figure 7). Le lecteur de badge acquiert alors de façon connue en soi le numéro de l'opérateur, porté par le badge (étape 91). L'étape suivante 92 consiste pour ge microprocesseur à tenir à jour un fichier opérateur qui peut être simplement la suite d'un fichier préexistant associé à ce numéro opérateur.

Le test 93 examine ensuite si un bilan a été demandé, notmamment par l'opérateur. Ce test peut répondre à différents types d'actions physiques, à savoir soit une poussée exercée sur la badge en cours de travail, soit un bouton-poussoir actionné par l'opératrice, ou tout moyen équivalent.

Après ce test 93, l'étape 94 affiche le cas échéant le nombre de pièces traitées par l'opérateur, accompagné éventuellement de celui des pièces restant à traiter, les deux affichages étant faits ensemble ou en séquence suivant la quantité d'informations à donner.

On retourne alors au fonctionnement normal du microprocesseur. A cet égard, l'homme de l'art comprendra que les organigrammes donnés aux figures 12 et 14 peuvent être réalisés par exemple sous la forme d'interruptions prioritaires sur le programme principal de chaque microprocesseur 70 affecté à un poste de travail.

On reviendra maintenant à la figure 1, sur laquelle on remarque que le dispositif clavier-afficheur UM1 est relié à un petit clavier-afficheur auxiliaire UAM.

Un tel clavier auxiliaire est utilisé avantageusement pour certains postes de travail, où il est souhaitable de modifier le code de destination des palettes porte-pièces d'une manière choisie par l'opératrice. C'est le cas en particulier pour un poste avec opératrice de contrôle et de surveillance, qui va pouvoir déterminer si une pièce—un interrupteur—est correcte, et peut être évacuée par le poste de sortie PC, après quoi la palette vide se voit donner le code d'initialisation (01 pour PM1) par l'organe d'écriture E52. Si, au contraire, l'interrupteur nécessite une révision ou une mise au rebut, l'opératrice lui donnera à l'aide du clavier-afficheur UAM le code de destination appropriée (par exemple (01/2B, figure 8).

On réalise maintenant la très grande souplesse qu'apportent les dispositions selon la présente invention, car celles-ci permettent de définir en même temps les paramètres de la cinématique des pièces et ceux des opérations à effectuer aux divers postes de travail, avec une possibilité d'exécution d'un certain nombre d'opérations différentes aux mêmes postes, en particulier pour les postes manuels. La tâche de l'opératrice est simplifiée dans le cas de travaux exceptionnels, qui peuvent être marqués par un codage spécial. De surcroît, il est possible d'effectuer une gestion centralisée de l'ensemble de l'installation. Malgré cela, les opératrices disposent en même temps d'une grande liberté dans l'aménagement de leur temps de travail, avec la possibilité de faire en permanence le bilan des travaux déjà effectués et de ceux qui restent à faire, et surtout, dans le mode de réalisation préférentiel décrit, la satisfaction d'un travail personnalisé: toutes les opérations manuelles concernant une même pièce sont faites par la même opératrice.

A ce propos, on notera que les postes ainsi personnalisés peuvent, dans certaines applications, être des postes automatiques. De plus, on peut constituer des équipes de postes personnalisés qui travaillent sur le même lot de palettes, du moins pour une séquence d'opérations déterminée. Enfin, on peut, pour les mêmes tâches, faire coexister des postes personnalisés avec d'autres qui ne le seraient pas, dans un but d'apprentissage de l'opératrice par exemple.

Bien entendu, on pourra, à l'aide des moyens de la présente invention, introduire au niveau du réglage de l'installation de nombreux autres paramètres, notamment ceux qui définissent les flux de circulation de pièces aux différents postes. De même, des variantes sont possibles dans les dispositions décrites. Par exemple, l'affichage du bilan de travail peut se faire à chaque poste sur un ordre émanant du micro-ordinateur UTC.

## Revendications

1. Installation pour effectuer des opérations définies telles qu'assemblage et/ou usinage, du type comportant une pluralité de postes de travail manuels (PM1 à PM3) et/ou automatiques (PA, PB1, et 2, PC), agencés chacun pour la réalisation de l'une au moins desdites opérations, ces postes de travail étant desservis par un circuit fermé principal du convoyage (CC), auquel ils sont associés chacun en série (PA, PB, PC) ou en dérivation (PM), ce circuit de convoyage véhiculant des palettes porte-pièces (101 à 136) munies de support d'informations codées modifiables et chaque poste de travail (PM, PA, PB, PC) comportant en amont de son emplacement de travail un organe de lecture (L) et à l'emplacement de travail ou en aval de celui-ci, un organe d'écriture (E) apte à donner un nouveau code à une palette, caractérisée en ce que chaque poste comporte une unité locale de gestion de données (UM, UA, UB, UC) avec des mémoires (70) et un interface d'entrée/sortie (72, 73), propre à être relié à des capteurs et/ou actionneurs servant pour l'exécution d'une ou plusieurs opérations successives, en un emplacement de travail dudit poste de travail, ladite mémoire (70) contenant à chaque poste au moins un table de correspondance (TAB 1) constituée de couples de codes de palettes, le premier code de chaque couple étant un code avec lequel une palette est autorisée à entrer dans le poste pour y subir une opération correspondant à ce code, tandis que le second code de chaque couple est normalement donné à la même palette, après l'exécution de ladite opération, et en ce que les mémoires des différents postes sont agencées avec des tables de correspondance respectives propres à faire subir aux produits portés par les palettes au moins une séquence d'opérations prédéterminées, jusqu'à un poste de sortie (PC).

2. Installation selon la revendication 1, caractérisé en ce que des postes répétés propres à effectuer les mêmes tâches, en particulier des postés à deux circuits parallèles (PM1 à PM3) sont associés à des mémoires dont les tables de correspondance n'ont aucun couple de codes en commun pour l'une au moins desdites séquences d'opérations prédéterminées, l'enchaînement de ces couples de codes non communs avec des couples de codes affectés à d'autres postes permettant d'associer un lot respectif de palettes identifiables à chacun des postes répétés précités.

3. Installation selon l'une des revendications 1 et 2, caractérisée en ce qu'à chaque unité locale de traitement (UM, UA, UB, UC) est associé un dispositif clavier-afficheur, relié à cette unité, et possédant au moins un état d'écriture où il permet l'introduction en mémoire de ladite table de correspondance (TAB 1), tandis que l'état normal du dispositif clavier-afficheur consiste à afficher le couple de codes concernant la palette présente à l'emplacement de travail du poste (01/02; figure 3).

4. Installation selon l'une des revendications 1 à 3, caractérisée en ce que, au moins pour les postes de travail (PM1 à PM3) travaillant en dérivation du circuit principal de convoyage, le dispositif clavier-afficheur (UM1 à UM3) possède un second état d'écriture dans lequel il permet la mémorisation du nombre maximal de palettes porte-pièces admissibles en même temps sur le trajet de dérivation du poste de travail concerné (64/03, figure 4).

5. Installation selon les revendications 1 à 4, caractérisée en ce que le dispositif clavier-afficheur possède au moins un troisième état d'écriture dans lequel il permet la mémorisation du côté (00/01 ou 00/00, figure 5) du circuit principal de convoyage sur lequel est situé le poste, pour permettre la transposition du code de lecture et d'écriture du support d'informations codées des palettes lorsque celui-ci conserve une même direction dans l'espace et est donc reconnu dans des sens différents de défilement.

6. Installation selon l'une des revendications précédentes, caractérisée en ce qu'au moins pour les postes manuels, le clavier-afficheur possède au moins un quatrième état d'écriture dans lequel il permet la mémorisation de la référence du produite traité ou la référence de l'opération à réaliser (01/23, figure 6), lorsque celle-ci est directement liée au code d'admission palette, et cette mémorisation définissant une autre table de correspondance (TAB 2), tandis que le clavier-afficheur permet au choix l'affichage du couple de codes d'admission et de destination (01/02; figure 3) ou de ladite référence (01/23; figure 6).

7. Installation selon les revendications 1 à 6, caractérisée en ce que les dispositifs claviers-afficheurs sont implantés de sorte qu'au moins leur partie clavier (CL) n'est pas accessible en service normal, tandis que leur partie affichage (VI) est visible en toutes circonstances.

8. Installation selon les revendications 1 à 7, caractérisée par le fait qu'au moins une unité locale de traitement à clavier-afficheur (UM1) possède un connecteur permettant le raccordement optionnel d'un deuxième clavier-afficheur (UAM) à la disposition d'un opérateur, ce clavier-auxiliaire permettant de modifier à distance le code de destination des palettes, ou la référence produit de manière ponctuelle sans changement du code automatique résident (01/23; figure 8).

9. Installation selon l'une des revendications 1 à 8, caractérisée en ce que l'unité de traitement est apte à conserver en mémoire le nombre et la nature des opérations effectuées au poste de travail où elle est implantée, et qu'il est prévu un état spécifique d'affichage du dispositif clavier-afficheur auxiliaire converné pour indiquer le travail accompli et/ou restant à faire à partir des informations mémorisées (4525; figure 7).

10. Installation selon l'une des revendications précédentes, caractérisée en ce que les différents dispositifs clavier-afficheur avec leur unité de traitement associée décentralisée sont aptes au raccordement à un bus optionnel de liaison susceptible de permettre l'interconnexion de tous les postes à un dispositif conversationnel de traitement centralisé (UTC) servant pour la surveillant des flux de circulation de l'ensemble des palettes et la télé-programmation manuelle et/ou automatique des modifications d'utilisation série ou parallèle des postes et/ou de leur numéro de code et/ou du nombre maximal de palettes porte-pièces admissibles en même temps sur leur circuit dérivé.

**Patentansprüche**

1. Anlage zur Durchführung bestimmter Arbeitsvorgänge, wie Montage und/oder Bearbeitung, mit einer Mehrzahl von Stationen für händische (PM 1 bis PM 3) und/oder automatische (PA, PB 1 und 2, PC) Arbeit, deren jede für die Durchführung mindestens einer der genannten Arbeitsvorgänge eingerichtet ist, wobei diese Arbeitsstationen durch einen geschlossenen Hauptförderkreis (CC) bedient werden, an den sie in Serie (PA, PB, PC) oder in Abzweigung (PM) angeschlossen sind, und dieser Förderkreis Teile tragende Paletten (101 bis 136) transportiert, die zum Tragen von veränderbaren codierten Informationen ausgerüstet sind, sowie jede der Arbeitsstationen (PM, PA, PB, PC), bezogen auf die Förderrichtung, oberhalb ihrer Arbeitsstelle ein Leseorgan (L) und an der Arbeitsstelle oder unterhalb dieser ein Schreiborgan (J) aufweist, das zur Abgabe eines neuen Codes auf eine Palette fähig ist, dadurch gekennzeichnet, daß jede Station eine Verwaltungs- bzw. Führungseinheit (UM, UA, UB, UC) mit Speichern (70) sowie einer Eingangs/Ausgangs-Schnittstelle (72, 73) aufweist, die mit Gebern und/oder Steuermotoren für die Durchführung einer oder mehrerer aufeinander folgender Arbeitsvorgänge an der Arbeitsstelle der genannten Arbeitsstation verbindbar ist, wobei der Speicher (70) an jeder Station mindestens eine Korrespondenztafel (TAB 1) aufweist, die Codepaare der Paletten bildet, der erste Code jeden Paares ist dabei ein Code, mit dem eine Palette zum Eintritt in eine Station berechtigt ist, um dort einen Arbeitsvorgang entsprechend diesem Code durchführen zu lassen, wogegen der zweite Code jeden Paares im Normalfall der gleichen Palette nach Durchführung des genannten Arbeitsvorganges gegeben wird, ferner, daß die Speicher der verschiedenen Stationen mit den entsprechenden Korrespondenztafeln dazu eingerichtet sind, die von den Paletten getragenen Produkte bis zur Ausgangsstation (PC) mindestens einer Folge von vorbestimmten Arbeitsvorgängen zu unterwerfen.

2. Anlage nach Anspruch 1, dadurch gekennzeichnet, daß die Stahionen, die zur Durchführung der gleichen Aufgabe geeignet sind, insbesondere die Stationen (PM 1 bis PM 3) an zwei parallelen Kreisen, mit den Speichern verbunden sind, deren Korrespondenztafeln kein gemeinsames Codepaar für mindestens eine der vorbestimmten Arbeitsfolgen haben, wobei es die Verknüpfung der nicht gemeinsamen Codepaare mit den den anderen Stationen zugewiesenen Codepaaren ermöglicht, jeder der genannten gleichartigen Stationen einen feststellbaren Anteil an Paletten zuzuweisen.

3. Anlage nach Anspruch 1 oder 2, dadurch gekennzeichnet, daß jeder der örtlichen Bearbeitungseinheiten (UM, UA, UB, UC) eine mit dieser verbundene Tastatur-Anzeigeeinrichtung zugeordnet ist, die mindestens einen Schreibzustand aufweist, in den sie eine Eingabe in den Speicher der genannten Korrespondenztafel (TAB 1) erlaubt, wogegen der Normalzustand der Tastatur-Anzeigeeinrichtung darin besteht, das der Palette an der Arbeitsstelle der Station betreffende Codepaare anzuzeigen (01/02; Figur 3).

4. Anlage nach einem der Ansprüche 1 bis 3, dadurch gekennzeichnet, daß die Tastatur-Anzeigeeinrichtung (UM 1 bis UM 3) mindestens für die in Abzweigung zum Hauptförderkreis arbeitenden Arbeitsstationen (PM 1 bis PM 3) einen zweiten Schreibzustand aufweist, in dem die Speicherung der maximalen Anzahl von Teile tragenden Paletten erlaubt ist, die gleichzeitig auf dem Abzweigungabschnitt der betreffenden Arbeitsstation zugelassen ist (64/03, Figur 4).

5. Anlage nach den Ansprüchen 1 bis 4, dadurch gekennzeichnet, daß die Tastatur-Anzeigeeinrichtung mindestens einen dritten Schreibzustand aufweist, in welchem die Speicherung der Seite (00/01 oder 00/00, Figur 5) des Hauptförderkreises möglich ist, auf dem die Station angeordnet ist, um die Umsetzung des Lese- und Schreibcodes des codierten Informationsträgers der Paletten zu erlauben, wenn dieser eine gleiche Richtung im Raum beibehält, sodaß er in verschiedenen Richtungen erkennbar ist.

6. Anlage nach einem der vorstehenden Ansprüche, dadurch gekennzeichnet, daß die Tastatur-Anzeigeeinrichtung wenigstens für die händischen Stationen mindestens einen vierten Schreibzustand aufweist, in dem die Speicherung des Hinweises auf das bearbeitete Produkt oder des Hinweises auf den durchzuführenden Arbeitsvorgang (01/23, Figure 6) erlaubt ist, wenn dieser direkt mit dem Zulassungscode der Palette verbunden ist, wobei diese Speicherung eine andere Korrespondenztafel (TAB 2) markiert, während die Tastatur-Anzeigeeinrichtung wahlweise die Anzeige des Codepaares der Zulassung und der Bestimmung (01/02; Figur 3) oder des genannten Hinweises (01/23; Figur 6) erlaubt.

7. Anlage nach den Ansprüchen 1 bis 6, dadurch gekennzeichnet, daß die Tastatur-Anzeigeeinrichtungen derart angeordnet sind, daß mindestens ihr Tastaturteil (CL) normal nicht zugänglich ist, wogegen ihr Anzeigeteil (VI) unter allen Umständen sichtbar ist.

8. Anlage nach den Ansprüchen 1 bis 7, dadurch gekennzeichnet, daß mindestens eine lokale Bearbeitungseinheit bzw. Tastaur-Anzeigeeinrichtung (UM 1) einen Anschluß aufweist, der die zusätzliche Verbindung mit einer zweiten Tastatur-Anzeigeeinrichtung (UAM) zur Verfügung eines Bedienenden ermöglicht, wobei diese Hilfstastatur aus einer Entfernung die Veränderung des Bestimmungcodes der Paletten oder des Produkthinweises auf punktuelle Art ohne Veränderung des vorhandenen automatischen Codes ermöglicht (01/23; Figur 8).

9. Anlage nach einem der Ansprüche 1 bis 8, dadurch gekennzeichnet, daß die Bearbeitungseinheit zur Speicherung der Anzahl und der Art der an der ihr zugeordneten Arbeitsstation durchgeführten Arbeitsvorgänge befähigt ist, und daß ein spezieller Anzeigzustand der Hilfs-Tastaturanzeigeeinrichtung vorgesehen ist, der die durchgeführte und/oder zum Durchführen verbleibende Arbeit anzeigt (45, 24; Figur 7).

10. Anlage nach einem der vorstehenden Ansprüche, dadurch gekennzeichnet, daß die verschiedenen Tastatur-Anzeigeeinrichtungen mit ihren zugehörigen Bearbeitungseinheiten an einen zusätzlichen Bus anschließbar sind, um alle Stationen an eine zentrale Bearbeitungseinheit (UTC) anzuschließen, die der Überwachung der Zirkulation der Gesamtheit der Paletten, der manuellen und/oder automatischen Fernprogrammierung von Veränderungen der Benützung der Stationen in Serie oder parallel und/oder ihrer Codenummer und/oder der zur gleichen Zeit auf den Ableitungen zugelassenen maximalen Anzahl von Teile tragenden Paletten dient.

**Claims**

1. Installation for performing predefined operations such as assembly and/or machining, of the type comprising a plurality of manual (PM1 to PM3) and/or automatic (PA, PB1, and 2, PC) work stations, each arranged for carrying out at least one of the said operations, these work stations being supplied by a closed circuit which is the main conveying circuit (CC), with which they are each associated in series (PA, PB, PC) or in branched manner (PM), this conveying circuit transporting workpiece-support pallets (101 to 136) which are provided with a carrier for modifiable coded data, and each work station (PM, PA, PB, PC) comprising upstream of its operating location a scanning member (L) and, at the operating location or downstream thereof, a recording member (E) adapted to provide a pallet with a new code, characterised in that each station comprises a local data control unit (UM, UA, UB, UC) with memories (70) and an input/output interface (72, 73) adapted to be connectable with sensors and/or actuators which serve for executing one or more successive operations, at an operating location of the said work station, the said memory (70) containing, at each station, at least one correspondence table (TAB 1) constituted by pairs of codes for pallets, the first code of each pair being a code with which a pallet is authorised to enter into the station in order to undergo there an operation corresponding to this code, whereas the second code of each pair is normally given to the same pallet after the execution of the said operation, and in that the memories of the different stations are arranged with respective correspondence tables adapted to cause the products carried by the pallets to undergo at least one sequence of predetermined operations, until an output station (PC) is reached.

2. Installation according to claim 1, characterised in that repeated stations, adapted to perform the same tasks, in particular, stations with two parallel circuits (PM1 to PM3), are associated with memories whose correspondence tables have no pair of codes in common for one at least of the said predetermined sequences of operations, the linking of these non-common pairs of codes with pairs of codes allocated to other stations making it possible to associate one respective batch of pallets identifiable at each of the aforementioned repeated stations.

3. Installation according to any one of claims 1 and 2, characterised in that with each local processing unit (UM, UA, UB, UC) there is associated a keyboard/display device, connected to this unit, and possessing at least one recording state wherein it enables the introduction into the memory of the said correspondence table (TAB 1), whereas the normal state of the keyboard/display device consists in displaying the pair of codes pertaining to the pallet which is present at the operating location of the station (01/02; figure 3).

4. Installation according to any one of claims 1 to 3, characterised in that, at least for the work stations (PM1 to PM3) operating in branched manner from the main conveying circuit, the keyboard display device (UM1 to UM3) possesses a second recording state wherein it enables the memorising of the maximum number of workpiece-support pallets admissible at the same time on the branch path of the work station concerned (64/03, figure 4).

5. Installation according to claims 1 to 4, characterised in that the keyboard/display device possesses at least one third recording state wherein it enables the memorising of the side (00/01 or 00/00, figure 5) of the main conveying circuit on which the station is situated, in order to enable the transposition of the scanning and recording code of the coded data carrier of the pallets when this latter keeps to one and the same direction in the space, and is therefore recognised in different directions of throughpassing.

6. Installation according to any one of the preceding claims, characterised in that at least for the manual stations, the keyboard/display device possesses at least one fourth recording state wherein it enables the memorising of the reference of the product treated, or the reference of the operation to be performed (01/23, figure 6) when the latter is directly linked with the pallet admission code, and this memorising defining another correspondence table (TAB 2), whereas the keyboard/display device enables the optional display of the pair of codes for admission and for destination (01/02; figure 3), or of the said reference (01/23; figure 6).

7. Installation according to claims 1 to 6, characterised in that the keyboard/display devices are implanted in such a manner that at least their keyboard part (CL) is not accessible during normal operation, whereas their display part (VI) is visible under all circumstances.

8. Installation according to claims 1 to 7, characterised by the fact that at least one local processing unit with a keyboard/display device (UM1) possesses a connector which enables the optional connection of a second keyboard/display device (UAM) which is available to an operator, this auxiliary keyboard making it possible to modify, from a distance, the destination code of the pallets, or the reference which is produced by means of dots, without changing the resident automatic doe (01/23; figure 8).

9. Installation according to any one of claims 1 to 8, characterised in that the processing unit is adapted to retain in its memory the number and the nature of the operations performed at the work station where it is implanted, and that a specific display state is provided for the auxiliary keyboard/display device concerned, for indicating the work performed and/or remaining to be performed, on the basis of data memorised (4524; figure 7).

10. Installation according to any one of the preceding claims, characterised in that the different keyboard/display devices, with their associated decentralised processing unit, are adapted to be connected to an optional connecting-bus which is capable of enabling the interconnection of all the stations to a centralized interactive processing device (UTC) which serves for monitoring the circulation flows of the entirety of the pallets, and the manual and/or automatic remote-control programming of utilisation modifications, in series or in parallel, of the stations and/or their code number and/or of the maximum number of workpiece-support pallets admissible at one and the same time on their branched circuit.

FIG. 1

FIG. 9

EP 0 129 482 B1

FIG. 2

EP 0 129 482 B1

CL   UM1-A   VI

FiG. 3

UM1-B

FiG.4

UM1-C

FiG. 5

UM1-D

FiG. 6

UAM-A   VI

CL

LB

FiG. 7

UAM-B   VI

LB

FiG.8

FIG. 11A

FIG. 11B

FIG. 11C

FIG. 10

CCI

PUA

70+71

72

73

75

VI

CCI

CL

PUA

70+71

72

73

75

CL

VI

CCI

TETE DE LECTURE
TETE D'ECRITURE
PEDALE

ACTIONNEURS
ELECTRO-PNEUMATIQUES

ENTREES
SORTIES

72

73

CL

CLAVIER

70

MICROPROCESSEUR
+ MEMOIRES

AFFICHAGE

VI

LB

LECTEUR
DE BADGE

71

BUS DONNEES (SERIE)

EP 0 129 482 B1

## FIG. 12

## FIG. 13